(19) Europäisches Patentamt
European Patent Office
Office européen des brevets

(11) EP 4 614 591 A1

(12) EUROPEAN PATENT APPLICATION

(43) Date of publication:
**10.09.2025 Bulletin 2025/37**

(21) Application number: **24221509.3**

(22) Date of filing: **19.12.2024**

(51) International Patent Classification (IPC):
***H01M 4/136*** *(2010.01)* ***H01M 4/58*** *(2010.01)*
***H01M 4/66*** *(2006.01)* ***H01M 10/0525*** *(2010.01)*
***H01M 10/0567*** *(2010.01)*

(52) Cooperative Patent Classification (CPC):
**H01M 4/5825; H01M 4/136; H01M 4/667; H01M 10/0525;** H01M 10/0567

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.03.2024 CN 202410246172**

(71) Applicant: **Nio Technology (Anhui) Co., Ltd**
**Hefei City, Anhui 230601 (CN)**

(72) Inventor: **XU, Zhixin**
**Anhui, 230601 (CN)**

(74) Representative: **Dr. Solf & Zapf**
**Patent- und Rechtsanwalts PartG mbB**
**Candidplatz 15**
**81543 München (DE)**

# (54) SECONDARY BATTERY AND APPARATUS

(57) A secondary battery, including a cathode, an anode and an electrolyte, where the electrolyte includes a lithium oxalate; the cathode includes a cathode active material and a solid electrolyte interface film on the surface of the cathode active material, and the cathode active material includes a lithium transition metal phosphate and a carbon coating layer covering the surface of the lithium transition metal phosphate, the carbon coating layer has a mass content of P% based on the mass of the cathode active material, with $0 < P < 5$; according to a measurement by an X-ray photoelectron spectrometer, at a sputtering etching time of 0 sec, of the cathode electrolyte interface formed at the surface of the cathode active material, the mass content of oxalate is $N_{Cx}$%, and the mass content of carbonate is $N_{Cn}$%; and $2 < P \times N_{Cx} / N_{Cn} < 5$.

EP 4 614 591 A1

## Description

### TECHNICAL FIELD

The present disclosure relates to the field of lithium batteries, and in particular to a secondary battery and a device.

### BACKGROUND ART

Lithium iron phosphate batteries have been widely used in the field of energy storage and power batteries due to their advantages of low cost and a long cycle life; nevertheless as the requirement for the service life of batteries becomes increasingly high, it is still of a great value to further improve the storage performance, cycling performance, safety performance and kinetic performance of lithium-ion batteries at a lower cost.

However, due to the property of a cathode material of lithium iron phosphate itself, a redox reaction involving $Fe^{2+}/Fe^{3+}$ interconversion occurs during charging and discharging. $Fe^{3+}$ has a certain solubility in the electrolyte, can dissolve out from the cathode, migrates to the surface of the anode, and is reduced to elementary Fe and $Fe^{2+}$. In turn, the $Fe^{2+}$ can migrate to the surface of the cathode and be oxidized to $Fe^{3+}$. The whole process is repeated continuously, leading to the occurrence of battery self-discharge, and finally to the decrease in battery capacity and cycle life decay.

### SUMMARY

In view of the above problems in prior art, the present disclosure provides a secondary battery and an apparatus. As for the secondary battery of the present disclosure, the relationship between the content of the carbon coating layer on the surface of the lithium transition metal phosphate in the cathode active material and the contents of the lithium oxalate derivative and lithium carbonate in the cathode electrolyte interface (CEI) film is controlled, such that the dissolution of transition metal in the active material is inhibited, and the cycling performance, rate performance and high-temperature safety of battery are improved.

A first aspect of the present disclosure provides a secondary battery, comprising a cathode, an anode and an electrolyte; the electrolyte comprises a lithium oxalate; the cathode comprises a cathode active material and a solid electrolyte interface film on the surface of the cathode active material, the cathode active material comprises a lithium transition metal phosphate and a carbon coating layer covering the surface of the lithium transition metal phosphate, the carbon coating layer has a mass content of P% based on the mass of the cathode active material, with $0 < P < 5$; according to a measurement by an X-ray photoelectron spectrometer, at a sputtering etching time of 0 sec, of the cathode electrolyte interface formed at the surface of the cathode active material, the mass content of the lithium oxalate derivative is $N_{Cx}$, and the mass content of lithium carbonate is $N_{Cn}$; where $2 < P \times N_{Cx} / N_{Cn} < 5$.

A second aspect of the present disclosure provides a power consuming device, including a secondary battery according to the first aspect.

According to the technical solution of the present disclosure, the following beneficial effects can be achieved: As for the secondary battery of the present disclosure, the dissolution of the transition metal in the cathode active material is significantly reduced, and the roomtemperature cycling performance, high-temperature cycling performance and rate performance of the secondary battery are improved. A lithium oxalate is added to the electrolyte, such that the thermal stability of the electrolyte is improved. Additionally, the contents of the oxalate and carbonate in the CEI film and the content of the carbon coating layer on the surface of the cathode active material are controlled in conjunction with each other, such that the dissolution of transition metal in the active material is reduced, and the cycling performance and high-temperature safety of battery is improved.

### DETAILED DESCRIPTION OF EMBODIMENTS

In order to make the objects, technical solutions and advantages of the present disclosure clearer, the technical solutions of the present disclosure will be clearly and completely described below in conjunction with embodiments. It is apparent that the described embodiments are some of, rather than all of, the embodiments of the disclosure. The relevant embodiments described herein are illustrative and are intended to provide a basic understanding of the disclosure. The embodiments of the present disclosure should not be construed as limiting the present disclosure.

For the sake of brevity, only some numerical ranges are specifically disclosed herein. However, any lower limit may be combined with any upper limit to form an unspecified range; and any lower limit may be combined with other lower limit to form an unspecified range, and likewise any upper limit may be combined with any other upper limit to form an unspecified range. In addition, each individually-disclosed point or individual numerical value itself may be combined as a lower or upper limit with any other point or individual numerical value, or with other lower or upper limit to form an

unspecified range.

Unless otherwise stated, the terms used in the disclosure have a meaning commonly understood by those skilled in the art. Unless otherwise stated, the numerical values of the parameters mentioned in the disclosure may be measured by various measuring methods commonly used in the art (e.g., may be tested according to the methods given in the examples of the disclosure).

The term "at least one of" or a list of items connected by other similar terms may mean any combination of the listed items. For example, if items A and B are listed, the phrase "at least one of A and B" means only A; or only B; or A and B. In another example, if items A, B and C are listed, the phrase "at least one of A, B and C" means only A; or only B; or only C; or A and B (excluding C); or A and C (excluding B); or B and C (excluding A); or A, B and C. Item A may contain a single component or a plurality of components. Item B may contain a single component or a plurality of components. Item C may contain a single component or a plurality of components.

The terms "not less than" and "not more than" include the given number.

## I. Secondary battery

One or more embodiments of the present disclosure provide a secondary battery, comprising a cathode, an anode and an electrolyte; the electrolyte comprises a lithium oxalate; the cathode comprises a cathode active material and a solid electrolyte interface film on the surface of the cathode active material, the cathode active material comprises a lithium transition metal phosphate and a carbon coating layer covering the surface of the lithium transition metal phosphate, the carbon coating layer has a mass content of P% based on the mass of the cathode active material, with $0 < P < 5$; according to a measurement by an X-ray photoelectron spectrometer, at a sputtering etching time of 0 sec, of the cathode electrolyte interface formed at the surface of the cathode active material, the mass content of the lithium oxalate derivative is $N_{Cx}$, and the mass content of lithium carbonate is $N_{Cn}$; where $2 < P \times N_{Cx} / N_{Cn} < 5$.

A too low numerical value of P means that the carbon coating layer is too thin, which cannot effectively improve the conductivity of the lithium transition metal phosphate itself, resulting in an unsatisfactory lithium-ion battery rate performance; A too high numerical value of P means that the carbon coating layer is too thick, which will significantly reduce the energy density of the lithium-ion battery, and additionally result in a more nonuniform coating and an increased defects, thus affecting the cycling performance of the lithium-ion battery. In the present disclosure, the content of the carbon coating layer on the surface of lithium transition metal phosphate may be measured by a conventional test method in the art, for example a thermogravimetric (TG) test.

In some embodiments, P is exemplarily 0.2, 0.5, 0.8, 1, 1.2, 1.5, 1.8, 2, 2.2, 2.5, 2.8, 3, 3.2, 3.5, 3.8, 4, 4.2, 4.5, 4.8, or a range between any two above numerical values. In some embodiments, $1 \le P \le 3.5$. In some embodiments, $1 \le P \le 1.8$.

A too low numerical value of $P \times N_{Cx} / N_{Cn}$ may lead to a decrease in the electronic conductivity of electrode, a decrease in the rate performance of lithium ion, and an increase in the dissolution of transition metal; If the numerical value is too high, the defects on the surface of electrode active material will increase, the side reactions of the electrolyte with the electrode will increase, affecting the cycling performance of battery, and moreover the impedance of CEI film will increase, reducing the kinetic performance of lithium ions.

In some embodiments, $P \times N_{Cx} / N_{Cn}$ is exemplarily 2.2, 2.4, 2.6, 2.8, 3, 3.2, 3.4, 3.6, 3.8, 4, 4.2, 4.4, 4.6, 4.8 or a range between any two above numerical values. In some embodiments, $2.2 \le P \times N_{Cx} / N_{Cn} \le 4.8$.

In some embodiments, $1.5 \le N_{Cx}/N_{Cn} \le 3.2$. A too low numerical value of $N_{Cx}/N_{Cn}$ may lead to an increase in the dissolution of transition metal, affecting the cycling performance of battery; A too high numerical value may result in an increase in the impedance of cathode CEI and a decrease in the dynamics of battery. $N_{Cx}/N_{Cn}$ is exemplarily 1.5, 1.7, 1.9, 2.1, 2.3, 2.5, 2.7, 2.9, 3.1, 3.2 or a range between any two above numerical values.

In some embodiments, $1 \le N_{Cx} \le 5$. If the numerical value of $N_{Cx}$ is too high, the impedance of electrode CEI will increase, affecting the kinetic performance of battery; If the numerical value is too low, the inhibitory effect on the dissolution of transition metal will decrease. $N_{Cx}$ is exemplarily 1, 1.5, 2, 2.5, 3, 3.5, 4, 4.5, 5 or a range between any two above numerical values.

In some embodiments, $0.5 \le N_{Cn} \le 5$. If the numerical value of $N_{Cn}$ is too high, the dissolution of transition metal will increase; If the numerical value is too low, the impedance of electrode CEI will increase, affecting the dynamic performance of battery. $N_{Cn}$ is exemplarily 0.5, 1, 1.5, 2, 2.5, 3, 3.5, 4, 4.5, 5 or a range between any two above numerical values.

In the present disclosure, the carbon coating layer at least covers a part of the surface of the lithium transition metal phosphate.

In some embodiments, the lithium oxalate is selected from at least one of a lithium (oxalate)borate and a lithium (oxalate)phosphate. In some embodiments, the lithium oxalate is selected from at least one of lithium bis(oxalate)borate (LiBOB), lithium difluoro(oxalate)borate (LiODFB), lithium tetrafluoro(oxalate)phosphate (LiTFOP) and lithium difluorobis(oxalate)phosphate (LiBODFP):

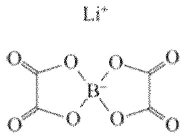 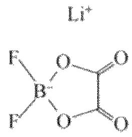 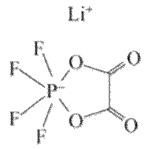 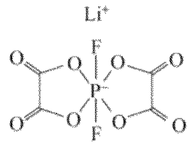

LiBOB LiODFB LiTFOP LiBODFP.

In some embodiments, the lithium oxalate is lithium bis(oxalate)borate (LiBOB).

In some embodiments, based on the mass of the electrolyte, the mass content of the lithium (oxalate)borate is 0.2%-5%, exemplarily 0.2%, 0.4%, 0.6%, 0.8%, 1%, 1.2%, 1.4%, 1.6%, 1.8%, 2%, 2.2%, 2.4%, 2.6%, 2.8%, 3%, 3.2%, 3.4%, 3.6%, 3.8%, 4%, 4.2%, 4.4%, 4.6%, 4.8%, 5% or a range between any two above numerical values.

In some embodiments, the electrolyte further includes lithium hexafluorophosphate, and based on the total weight of the electrolyte, the mass content of the lithium hexafluorophosphate is 13% to 19%, for example 13%, 14%, 15%, 16%, 17%, 18%, 19% or a range between any two above numerical values. If the content of lithium hexafluorophosphate is too low, the conductivity of electrolyte will be insufficient, thereby affecting the performance of the battery; If the content is too high, the viscosity of the electrolyte will become large, affecting the wetting of electrode plate in the electrolyte, and thereby affecting the performance of battery. In some embodiments, based on the total weight of the electrolyte, the mass content of the lithium hexafluorophosphate is 15% to 17%.

In some embodiments, the electrolyte comprises lithium hexafluorophosphate and a lithium bis(fluorosulfonyl) imide, at a mass ratio of the lithium hexafluorophosphate to lithium bis(fluorosulfonyl)imide of 5-20. If the mass ratio of the lithium bis(fluorosulfonyl)imide to lithium hexafluorophosphate is controlled within the above range, the high-temperature cycling performance and high-temperature safety performance of the battery can be further improved.

In some embodiments, the electrolyte further comprises another lithium salt, for example at least one of lithium tetrafluoroborate ($LiBF_4$), lithium trifluorosulfonyl (LiOTf), lithium (trifluoromethylsulfonyl)(perfluorobutylsulfonyl)imide (LiFNFSI), lithium bis(pentafluoroethylsulfonyl)imide (LiBETI) and lithium 4,5-dicyano-2-(trifluoromethyl)imidazol- 1-ide (LiTDI).

In some embodiments, the electrolyte further includes vinylene carbonate, and based on the mass of the electrolyte, the mass content of the vinylene carbonate is 0.5%-1.5%, exemplarily 0.5%, 0.6%, 0.7%, 0.8%, 0.9%, 1%, 1.1%, 1.2%, 1.3%, 1.4%, 1.5%, or a range between any two above numerical values. If the content of vinylene carbonate is too high, a thicker CEI film will be formed on the surface of the lithium transition metal phosphate, reducing the kinetic performance of battery, even leading to lithium evolution at the anode, and thereby deteriorating the cycle life and safety performance of battery.

In some embodiments, the electrolyte includes vinylene carbonate and at least one additive selected from fluoroethylene carbonate (FEC), vinylethylene carbonate (VEC), 1,3-propanesultone (PS), ethylene sulfate (DTD), 1,3-propenesultone (PST), ethylene sulfite (ES), tris(trimethylsilyl)phosphate (TMSP), tris(trimethylsilyl)borate (TMSB) and methylene methanedisulfonate (MMDS), and the mass ratio of the additive to the vinylene carbonate is 1-4, exemplarily 1, 1.5, 2, 2.5, 3, 3.5, 4 or a range between any two above numerical values.

In some embodiments, the electrolyte includes vinylene carbonate and at least one additive selected from fluoroethylene carbonate, 1,3-propanesultone, ethylene sulfate and 1,3-propenesultone, and the mass ratio of the additive to the vinylene carbonate is 1-4.

In some embodiments, the electrolyte includes vinylene carbonate and fluoroethylene carbonate, and the mass ratio of fluoroethylene carbonate to vinylene carbonate is 1-4.

In some embodiments, the electrolyte further includes a solvent, and the solvent is selected from at least one of a chain carbonate, a cyclic carbonate and a carboxylate. The chain carbonate includes, but is not limited to one or more of dimethyl carbonate (DMC), ethyl methyl carbonate (EMC), diethyl carbonate (DEC), dipropyl carbonate (DPC), methyl propyl carbonate (MPC) and ethyl propyl carbonate (EPC). The cyclic carbonate includes, but is not limited to, one or more of ethylene carbonate (EC), propylene carbonate (PC) and butylene carbonate (BC). The carboxylate includes, but is not limited to one or more of methyl formate, methyl acetate, ethyl acetate, n-propyl acetate, tert-butyl acetate, methyl propionate, ethyl propionate, propyl propionate, γ-butyrolactone, decalactone, valerolactone or caprolactone.

In some embodiments, the electrolyte includes a solvent, and the solvent includes at least one of dimethyl carbonate, ethyl methyl carbonate and diethyl carbonate, and based on the mass of the solvent, the sum of the mass contents of the dimethyl carbonate, ethyl methyl carbonate and diethyl carbonate is 50%-70%. The solvent employs 50 wt%-70 wt% of dimethyl carbonate, ethyl methyl carbonate and diethyl carbonate, which can further improve the wetting of a highly compacted lithium transition metal phosphate cathode, and thereby improve the cycling performance and rate performance of the battery.

In some embodiments, the electrolyte includes a solvent, and the solvent includes at least one of ethyl acetate and methyl acetate, and based on the mass of the solvent, the sum of the mass contents of the ethyl acetate and methyl acetate is 10%-20%. With respect to the solvent, the use of 10 wt%-20 wt% of ethyl acetate and methyl acetate can further

improve the wetting of a highly compacted lithium transition metal phosphate cathode, and thereby improve the cycling performance and rate performance of the battery.

In some embodiments, the electrolyte includes a cyclic carbonate, a chain carbonate, lithium hexafluorophosphate and a lithium oxalate, and based on the mass of the electrolyte, the mass content of the cyclic carbonate is 15%-30%, the mass content of the chain carbonate is 50%-70%, and the mass content of the lithium hexafluorophosphate is 13%-19%, the mass content of the lithium oxalate is 0.2%-5%, and the chain carbonate is selected from at least one of dimethyl carbonate, ethyl methyl carbonate and diethyl carbonate.

In some embodiments, the electrolyte includes a cyclic carbonate, a chain carbonate, lithium hexafluorophosphate, a lithium bis(fluorosulfonyl)imide, a lithium oxalate, vinylene carbonate and at least one additive selected from fluoroethylene carbonate, 1,3-propanesultone, ethylene sulfate and 1,3-propenesultone, and based on the mass of the electrolyte, the mass content of the cyclic carbonate is 15%-30%, the mass content of the chain carbonate is 50%-70%, the mass content of the lithium hexafluorophosphate is 13%-19%, the mass content of the lithium bis(fluorosulfonyl)imide is 1%-3%, the mass content of the lithium oxalate is 0.2%-5%, the mass content of the vinylene carbonate is 0.2%-1%, and the mass content of the additive is 0%-2.5%; The chain carbonate is selected from at least one of dimethyl carbonate, ethyl methyl carbonate and diethyl carbonate.

In some embodiments, the cathode has a compacted density of 2.45 g/cm$^3$ to 2.7 g/cm$^3$. The inventors of the present disclosure found that when the compacted density of the cathode is not less than 2.45 g/cm$^3$, the performance of the battery capacity will decrease, the polarization during charge and discharge will increase, the side reaction of the electrolyte with the active material will increase, and the dissolution of the transition metal will also increase, thereby shortening the service life of battery. By controlling the contents of the oxalate and carbonate in the CEI film and the content of the carbon coating layer on the surface of cathode active material in conjunction with each other, the above performance deterioration caused by the highly compacted cathode can be mitigated.

In the present disclosure, the solid electrolyte interface film is a non-artificial film. In some embodiments, the solid electrolyte interface film is formed by the reaction of the cathode active material with the electrolyte. In some embodiments, the solid electrolyte interface film is obtained by means of formation.

In the present disclosure, the oxalate in the solid electrolyte interface film comes from a lithium oxalate derivative, and the carbonate comes from lithium carbonate.

In some embodiments, the compacted density of the cathode is exemplarily 2.45 g/cm$^3$, 2.5 g/cm$^3$, 2.55 g/cm$^3$, 2.6 g/cm$^3$, 2.65 g/cm$^3$, 2.7 g/cm$^3$ or a range between any two above numerical values. In some embodiments, the cathode has a compacted density of 2.5 g/cm$^3$ to 2.7 g/cm$^3$. In some embodiments, the cathode has a compacted density of 2.55 g/cm$^3$ to 2.7 g/cm$^3$.

In some embodiments, the lithium transition metal phosphate is selected from at least one of compounds representing by formula $Li_xFe_yM_{(1-y)}PO_4$, where $-0.5 \leq x \leq 0.5$, $0 < y \leq 1$, and M is selected from at least one of Mn, Ni, Co, Al, Mg, Ti, Ca, Zn, Ga, Cu, V, Nb, Zr, In and Y In some embodiments, x is -0.5, -0.4, -0.3, -0.2, -0.1, 0, 0.1, 0.2, 0.3, 0.4, 0.5, or a range between any two of these values. In some embodiments, y is 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, or a range between any two of these values.

In some embodiments, the lithium transition metal phosphate includes at least one of lithium iron phosphate and lithium manganese iron phosphate (e.g., $LiMn_{0.6}Fe_{0.4}PO_4$ or $LiMn_{0.8}Fe_{0.2}PO_4$).

In some embodiments, the cathode further includes a binder, and optionally a conductive material. The binder includes, but is not limited to polyvinylidene fluoride and polytetrafluoroethylene, and the conducting agent includes, but is not limited to carbon nanotubes, carbon black and acetylene black. In some embodiments, the cathode further includes a cathode current collector. The cathode current collector includes, but is not limited to a metal foil (such as an aluminum foil), a composite current collector (such as a current collector formed by compounding metal materials on a polymer substrate).

In some embodiments, the anode includes at least one of artificial graphite and natural graphite.

In some embodiments, the anode further includes a binder, and optionally a conducting agent. The binder includes, but is not limited to styrene butadiene rubber and acrylated styrene butadiene rubber, and the conducting agent includes, but is not limited to carbon nanotubes, carbon black and acetylene black. In some embodiments, the anode further includes an anode current collector. The anode current collector includes, but is not limited to a copper foil, a nickel foil, foamed nickel and foamed copper.

In some embodiments, a separator film is provided between the cathode and the anode to prevent short circuit. The material and shape of the separator in the embodiments of the disclosure are not particularly limited and may be any technique disclosed in the prior art. In some embodiments, the separator includes a polymer, an inorganic matter, etc., formed from a material that is stable to the electrolyte of the present disclosure.

In some embodiments, the preparation method for the secondary battery includes the steps of providing an electrode assembly, filling with an electrolyte, sealing, and formation. In some embodiments, the temperature of the formation is 30°C to 60°C, for example 30°C, 32°C, 34°C, 36°C, 38°C, 40°C, 42°C, 44°C, 46°C, 48°C, 50°C, 52°C, 54°C, 56°C, 58°C and 60°C. In some embodiments, the temperature of the formation is 30°C to 50°C.

In some embodiments, the secondary battery is subjected to formation. In some embodiments, the solid

electrolyte interface film is obtained by the formation of the secondary battery. During the formation of the secondary battery, the lithium oxalate is oxidized to form a CEI film on the surface of cathode active material, and inhibit the continuous reaction of the electrolyte with the cathode active material. After a plurality of cycles of the secondary battery, the absolute contents of the oxalate and carbonate in the CEI film will slightly differ from those after formation, but the relative content, i.e., the ratio of the oxalate mass content percentage to the carbonate mass content percentage in the CEI film is still 1.5-3.2.

In some embodiments, the secondary battery has an electrolyte filling coefficient of 3 g/Ah-3.8 g/Ah, exemplarily 3 g/Ah, 3.1 g/Ah, 3.2 g/Ah, 3.3 g/Ah, 3.4 g/Ah, 3.5 g/Ah, 3.6 g/Ah, 3.7 g/Ah, 3.8 g/Ah or a range between any two above numerical values. If the electrolyte filling coefficient of the secondary battery is too high, the energy density of the battery will decrease, and if the electrolyte filling coefficient is too low, the cycling performance of the battery will deteriorate.

In some embodiments, the secondary battery may include an outer package, which may be a hard shell, such as a hard plastic shell, an aluminum shell and a steel shell. The outer package of the secondary battery may also be a soft package, such as a bag-type pouch. In some embodiments, there are no particular restrictions on the shape of the secondary battery, and the shape may be cylindrical, square or any other shape.

In some embodiments, the present disclosure also provides a battery module. The battery module includes the above secondary battery. For the battery module of the present disclosure, the above secondary battery is used, and therefore, the battery module at least has the same advantages as the secondary battery. The battery module of the present disclosure may contain a plurality of secondary batteries, the specific number of which may be adjusted according to the application and the capacity of the battery module.

In some embodiments, the present disclosure also provides a battery pack including the above battery module. The number of battery modules contained in the battery pack may be adjusted according to the application and capacity of the battery pack.

II. Power consuming device

The present disclosure also provides a power consuming device including at least one of the above secondary battery, battery module and battery pack.

In some embodiments, the power consuming device includes, but is not limited to: an electric vehicle, a hybrid electric vehicle, a plug-in hybrid electric vehicle, an electricity storage system, etc. In order to meet the requirements of the device for a high power and a high energy density of a secondary battery, a battery pack or a battery module may be used.

In other embodiments, the power consuming device may be a mobile phone, a tablet, a laptop, etc. The apparatus is usually required to be light and thin, and may use the secondary battery as power supply.

## Examples and Comparative examples

Examples and Comparative examples are given below to further describe the present disclosure in detail, but the present disclosure is not limited to these examples.

The materials, solvents and the like used in the following examples and Comparative examples are commercially available.

## Example 1

Preparation of cathode: An $LiFePO_4$ cathode active material, a carbon nanotube (CNT) conducting agent, an acetylene black conducting agent, and a polyvinylidene fluoride (PVDF) binder were mixed at a weight ratio of 95 : 2 : 1 : 2, then dispersed in an N-methylpyrrolidone (NMP) solvent, and stirred until uniform. The resulting slurry was uniformly applied onto the surface of one side of a carbon-coated aluminum foil with a thickness of 12 $\mu$m, and dried, and then the above steps were performed again for the surface of the other side of the carbon-coated aluminum foil, and then the coated electrode plate was dried, roller-pressed twice (with a roller-pressing load of 1,000 N/m), and slitted, so as to obtain a cathode with a compacted density of 2.55 g/$cm^3$.

The anode was prepared by the following steps: An artificial graphite anode active material, an acetylene black conducting agent, a styrene butadiene rubber (SBR) binder, and a sodium carboxymethylcellulose (CMC-Na) thickener were mixed at a weight ratio of 96 : 2 : 2 : 1, then dispersed in a deionized water solvent, and stirred until uniform. The resulting slurry was uniformly applied onto the surface of one side of an 8 $\mu$m thick copper foil, and dried, and then the above steps were performed again for the surface of the other side of copper foil, and the coated electrode plate was dried, roller-pressed, and slitted, so as to obtain an anode.

Separator film: A three-layered PP/PE/PP composite separator film was used.

Preparation of electrolyte: In an argon-protected glove box (with $H_2O$ < 0.1 ppm and $O_2$ < 0.1 ppm), ethylene carbonate (EC), diethyl carbonate (DEC) and ethyl methyl carbonate (EMC) solvents were mixed at a weight ratio of 25 :

20 : 55, and lithium hexafluorophosphate ($LiPF_6$) was added to prepare a solution containing 17 wt% of the lithium hexafluorophosphate, and then referring to the amount in Table 1, 0.5% of lithium bis(oxalate)borate (LiBOB), based on the total mass of the electrolyte, was added, and stirred until uniform to obtain the lithium-ion battery electrolyte of example 1.

Preparation of lithium-ion battery: The prepared cathode, separator and anode were sequentially stacked up, such that the separator was located between the cathode and the anode, and winding was performed to obtain a bare cell; The bare cell is placed in an outer package made from an aluminum plastic film, fully dried, and filled with the prepared lithium-ion battery electrolyte, with the electrolyte filling coefficient being 3.5 Ah/g. The battery was left at 45°C, followed by formation with a fixture at a high temperature, secondary sealing, and then a conventional capacity grading to obtain the lithium-ion battery.

**Examples 2-14 and comparative examples 1-7**

Based on example 1, examples 2-14 and comparative examples 1-7 were performed by adjusting the mixing ratio of the lithium hexafluorophosphate to lithium bis(fluorosulfonyl)imide, the type and content of lithium oxalate, and the type and amount of other additive in the electrolyte, the carbon coating amount on the surface of lithium iron phosphate, the electrolyte filling coefficient, and the formation temperature. Specific adjustment measures and detailed data were shown in Table 1.

Table 1

| | Lithium salts | Lithium oxalate | Other additives | Coating amount P on lithium iron phosphate | Electrolyte filling coefficient | Formation temperature |
|---|---|---|---|---|---|---|
| Example 1 | 17% $LiPF_6$ | 0.5% LiBOB | / | 1.5% | 3.5g/Ah | 45°C |
| Example 2 | 17% $LiPF_6$ | 1% LiBOB | / | 1.5% | 3.5g/Ah | 45°C |
| Example 3 | 17% $LiPF_6$ | 2% LiBOB | / | 1.5% | 3.5g/Ah | 45°C |
| Example 4 | 17% $LiPF_6$ | 4% LiBOB | / | 1.5% | 3.5g/Ah | 45°C |
| Example 5 | 15% $LiPF_6$ 2% LiFSI | 1% LiBOB | / | 1.5% | 3.5g/Ah | 45°C |
| Example 6 | 15% $LiPF_6$ 2% LiFSI | 1% LiBOB | 0.5%VC | 1.5% | 3.5g/Ah | 45°C |
| Example 7 | 15% $LiPF_6$ 2% LiFSI | 1% LiBOB | 0.5%VC 0.5%PS | 1.5% | 3.5g/Ah | 45°C |
| Example 8 | 15% $LiPF_6$ 2% LiFSI | 1% LiBOB | 0.5%VC 2%FEC | 1.5% | 3.5g/Ah | 45°C |
| Example 9 | 15% $LiPF_6$ 2% LiFSI | 1% LiODFB | 0.5%VC 2%FEC | 1.5% | 3.5g/Ah | 45°C |
| Example 10 | 15% $LiPF_6$ 2% LiFSI | 1% LiTFOP | 0.5%VC 2%FEC | 1.5% | 3.5g/Ah | 45°C |
| Example 11 | 15% $LiPF_6$ 2% LiFSI | 1% LiBODFP | 0.5%VC 2%FEC | 1.5% | 3.5g/Ah | 45°C |
| Example 12 | 15% $LiPF_6$ 2% LiFSI | 1% LiBOB | 0.5%VC 2%FEC | 2% | 3.5g/Ah | 45°C |
| Example 13 | 15% $LiPF_6$ 2% LiFSI | 1% LiBOB | 0.5%VC 2%FEC | 1.5% | 3.8g/Ah | 45°C |
| Example 14 | 15% $LiPF_6$ 2% LiFSI | 1% LiBOB | 0.5%VC 2%FEC | 1.5% | 3.5g/Ah | 40°C |
| Comparative example 1 | 15% $LiPF_6$ 2% LiFSI | / | 0.5%VC 2%FEC | 1.5% | 3.5g/Ah | 45°C |

(continued)

| | Lithium salts | Lithium oxalate | Other additives | Coating amount P on lithium iron phosphate | Electrolyte filling coefficient | Formation temperature |
|---|---|---|---|---|---|---|
| Comparative example 2 | 15% $LiPF_6$ 2% LiFSI | 0.1% LiBOB | 0.5%VC 2%FEC | 1.5% | 3.5g/Ah | 45°C |
| Comparative example 3 | 15% $LiPF_6$ 2% LiFSI | 6% LiBOB | 0.5%VC 2%FEC | 1.5% | 3.5g/Ah | 45°C |
| Comparative example 4 | 15% $LiPF_6$ 2% LiFSI | 1% LiBOB | 0.5%VC 2%FEC | 0.5% | 3.5g/Ah | 45°C |
| Comparative example 5 | 15% $LiPF_6$ 2% LiFSI | 1% LiBOB | 0.5%VC 2%FEC | 3% | 3.5g/Ah | 45°C |
| Comparative example 6 | 15% $LiPF_6$ 2% LiFSI | 1% LiBOB | 0.5%VC 2%FEC | 1.5% | 2.6g/Ah | 45°C |
| Comparative example 7 | 15% $LiPF_6$ 2% LiFSI | 1% LiBOB | 0.5%VC 2%FEC | 1.5% | 2.6g/Ah | 20°C |

**Test method**

1. Determination of carbon coating amount on the surface of lithium iron phosphate

0.1 g of a lithium iron phosphate powder ($m_0$ =0.1) was taken and added to a crucible, and then subjected to a thermogravimetric (TG) test. The powder was heated to 800°C in the air, with a mass recorded as $m_1$, and the numerical value of the carbon cladding amount P% = $(m_0 - m_1)/m_0$%.

2. Determination of compacted density of electrode plate

The compacted density of electrode plate = areal density (g/cm$^2$) of electrode plate / thickness (cm) of active material layer. A cathode was cut out and weighed, with a mass recorded as Mi, and a thickness recorded as Hi, and then the active material layer on the electrode plate was scraped off and weighed, with a mass recorded as $M_2$, and a thickness recorded as $H_2$, and then the area of the electrode plate was measured and recorded as V, and the areal density of electrode plate = $(Mi - M_2) / V / (H_1 - H_2)$. Here, the mass may be weighed by a standard balance, and the thickness may be measured by a micrometer.

3. XPS test

The lithium-ion battery was discharged to 2.5 V at a current of 0.1C, and dismantled in an argon-filled glove box to obtain the electrode plate. From the resulting electrode plate a test sample with a dimension of 8 mm × 8 mm was cut, and immersed in a dimethyl carbonate (DMC) solvent with a low boiling point for half an hour. After the complete drying, the test sample was attached to the sample platform of XPS in such a manner that the surface, away from current collector, of the cathode active material layer faced upwards. The measurement was performed without being exposed to the atmosphere. The specific test conditions and steps are as follows:
Single-crystal spectrum AlKα rays were used; as for the X-ray point, a 1000 × 1750 μm elliptical form with outputs of 10 KV and 22 mA was used; the data at a sputtering etching time of 0 sec was selected; 284.8 eV was used for neutral carbon C1s; as for data processing such as peak differentiation, 3-point smoothing, peak area measurement, baseline subtraction and peak synthesis were used to calculate the carbonate content $N_{Cn}$% and the oxalate content $N_{Cx}$% in the CEI.

4. Test on capacity retention after 1,000 cycles at 1C/1C at 25°C

At 25°C, the prepared lithium-ion secondary battery was charged to 3.8 V at a constant current of 1C, and then was charged at a constant voltage until the current was less than 0.05 C. After standing for 5 min, the battery was discharged to 2.7 V at a rate of 1C, and the initial discharge capacity was recorded. The lithium-ion secondary battery was subjected to 1,000 cycles of charge/discharge according to the above method, and the discharge capacity of each time was recorded. The capacity retention of the lithium-ion secondary battery after 1,000 cycles at 1C/1C at 25°C = discharge

capacity of the 1,000th discharge / initial discharge capacity × 100%.

5. Test on the capacity retention after 200 cycles in 2C/0.5C at 25°C

At 25°C, the prepared lithium-ion secondary battery was charged to 3.8 V using a constant current of 2C, and then was charged under a constant voltage until the current was less than 0.05 C. After standing for 5 min, the battery was discharged to 2.7 V using a rate of 0.5C, and the initial discharge capacity was recorded. The lithium-ion secondary battery was subjected to 200 cycles of charge/discharge according to the above method, and the discharge capacity of each time was recorded. The capacity retention of the lithium-ion secondary battery after 200 cycles at 2C/0.5C at 25°C = discharge capacity of the 200th discharge / initial discharge capacity × 100%.

6. Test on capacity retention after 500 cycles at 1C/1C at 45°C

At 45°C, the prepared lithium-ion secondary battery was charged to 3.8 V at a constant current of 1C, and then was charged at a constant voltage until the current was less than 0.05 C. After standing for 5 min, the battery was discharged to 2.7 V at a rate of 1C, and the initial discharge capacity was recorded. The lithium-ion secondary battery was subjected to 500 cycles of charge/discharge according to the above method, and the discharge capacity of each time was recorded. The capacity retention of the lithium-ion secondary battery after 500 cycles at 1C/1C at 45°C = discharge capacity of the 500th discharge / initial discharge capacity × 100%.

7. Determination of $Fe^{3+}$ content of separator after storage at 60°C for 21d

The cell after the storage at 60°C was dismantled, and then 0.1 g of the separator was precisely weighed out and in a 50 mL quartz beaker, 4.0 mL of aqua regia was added, and the beaker was covered with a watch glass, placed on an electrical furnace, and heated at a low temperature such that it slightly boils, and after 15 min dissolution, the beaker was taken off for cooling. The solution was transferred to a 50 mL plastic volumetric flask, diluted, and shaken until uniform. Before determination, the test solution was fully shaken, and left to stand for a while, and then ICP was used to test the sample for Fe element content, in ppm.

The test data are shown in Table 2 below.

Table 2

| | $N_{Cx}/N_{Cn}{}^a$ | PNcx/Ncn | Capacity retention (%) after 1,000 cycles at 25°C/1C | Capacity retention (%) after 200 cycles at 25°C/2C | Capacity retention (%) after 500 cycles at 45°C/1C | $Fe^{3+}$ content (ppm) of separator after storage at 60°C for 21d |
|---|---|---|---|---|---|---|
| Example 1 | 1.6 | 2.4 | 85 | 84 | 80 | 88 |
| Example 2 | 2.0 | 3.0 | 89 | 88 | 84 | 79 |
| Example 3 | 2.5 | 3.75 | 87 | 86 | 82 | 65 |
| Example 4 | 3.1 | 4.65 | 86 | 86 | 81 | 50 |
| Example 5 | 1.9 | 2.8 | 90 | 89 | 85 | 74 |
| Example 6 | 2.0 | 3.0 | 90 | 88 | 85 | 78 |
| Example 7 | 2.1 | 3.15 | 91 | 88 | 86 | 85 |
| Example 8 | 2.3 | 3.45 | 92 | 90 | 88 | 78 |
| Example 8 | 1.9 | 2.85 | 90 | 88 | 86 | 95 |
| Example 9 | 1.8 | 2.7 | 88 | 85 | 83 | 99 |
| Example 10 | 2.2 | 3.3 | 90 | 86 | 82 | 96 |
| Example 11 | 2.1 | 3.15 | 90 | 90 | 87 | 80 |
| Example 12 | 2.5 | 3.75 | 91 | 89 | 86 | 85 |
| Example 13 | 2.2 | 3.3 | 89 | 88 | 87 | 79 |
| Comparative example 1 | 0 | 0 | 65 | 62 | 60 | 280 |

(continued)

| | $N_{Cx}/N_{Cn}$[a] | PNcx/Ncn | Capacity retention (%) after 1,000 cycles at 25°C/1C | Capacity retention (%) after 200 cycles at 25°C/2C | Capacity retention (%) after 500 cycles at 45°C/1C | $Fe^{3+}$ content (ppm) of separator after storage at 60°C for 21d |
|---|---|---|---|---|---|---|
| Comparative example 2 | 0.5 | 0.75 | 68 | 66 | 63 | 256 |
| Comparative example 3 | 6 | 9 | 72 | 70 | 68 | 70 |
| Comparative example 4 | 0.6 | 0.9 | 75 | 68 | 71 | 92 |
| Comparative example 5 | 4.5 | 6.75 | 71 | 70 | 65 | 86 |
| Comparative example 6 | 1.2 | 1.8 | 64 | 60 | 62 | 114 |
| Comparative example 7 | 3.5 | 5.25 | 68 | 66 | 64 | 96 |
| a: In the examples, all of the $N_{Cx}$ are 1-5, and all of the $N_{Cn}$ are 0.5-5. | | | | | | |

While some exemplary embodiments of the present disclosure have been illustrated and described, the present disclosure is not limited to the disclosed embodiments. Rather, the ordinary artisans concerned will recognize that some modifications and changes may be made to the described embodiments without departing from the scope of the present disclosure as described in the appended claims.

## Claims

**1.** A secondary battery, wherein the secondary battery comprises a cathode, an anode and an electrolyte;

the electrolyte comprises a lithium oxalate;
the cathode comprises a cathode active material and a solid electrolyte interface film on the surface of the cathode active material, the cathode active material comprises a lithium transition metal phosphate and a carbon coating layer covering the surface of the lithium transition metal phosphate, the carbon coating layer has a mass content of P% based on the mass of the cathode active material, with $0 < P < 5$;
according to a measurement by an X-ray photoelectron spectrometer, at a sputtering etching time of 0 sec, of the cathode electrolyte interface formed at the surface of the cathode active material, the mass content of oxalate is $N_{Cx}$%, and the mass content of carbonate is $N_{Cn}$%;
wherein

$$2 < P \times N_{Cx} / N_{Cn} < 5.$$

**2.** The secondary battery according to claim 1, wherein the secondary battery satisfies at least one of the following conditions:

$$\text{(i) } 1 \le P \le 3.5,$$

$$\text{(ii) } 1.5 \le N_{Cx} / N_{Cn} \le 3.2,$$

and

$$\text{(iii) } 2.2 \le P \times N_{Cx} / N_{Cn} \le 4.8.$$

**3.** The secondary battery according to claim 1 or 2, wherein the secondary battery satisfies at least one of the following conditions:

$$(iv)\ 1 \leq N_{Cx} \leq 5,$$

and

$$(v)\ 0.5 \leq N_{Cn} \leq 5.$$

4. The secondary battery according to any one of claims 1 to 3, wherein the cathode has a compacted density of 2.45 $g/cm^3$ to 2.7 $g/cm^3$; and/or,
the lithium transition metal phosphate comprises at least one of lithium iron phosphate and lithium manganese iron phosphate.

5. The secondary battery according to any one of claims 1 to 4, wherein the lithium oxalate is selected from at least one of a lithium (oxalate)borate and a lithium (oxalate)phosphate; and/or,
the mass content of the lithium oxalate is 0.2%-5% based on the mass of the electrolyte.

6. The secondary battery according to claim 5, wherein the lithium oxalate is selected from at least one of lithium bis(oxalate)borate, lithium difluoro(oxalate)borate, lithium tetrafluoro(oxalate)phosphate and lithium difluorobis(oxalate)phosphate.

7. The secondary battery according to any one of claims 1 to 6, wherein the electrolyte further comprises lithium hexafluorophosphate, and based on the mass of the electrolyte, the mass content of the lithium hexafluorophosphate is 13%-19%; and/or,
the electrolyte further comprises vinylene carbonate, and based on the mass of the electrolyte, the mass content of the vinylene carbonate is 0.5%-1.5%.

8. The secondary battery according to claim 7, wherein the electrolyte further comprises a lithium bis(fluorosulfonyl) imide, and the mass ratio of the lithium hexafluorophosphate to the lithium bis(fluorosulfonyl)imide is 5-20; and/or,
the electrolyte further comprises an additive selected from fluoroethylene carbonate, vinylethylene carbonate, 1,3-propanesultone, ethylene sulfate, 1,3-propenesultone, ethylene sulfite, tris(trimethylsilyl)phosphate, tris(trimethylsilyl)borate and methylene methanedisulfonate, and the mass ratio of the additive to the vinylene carbonate is 1-4.

9. The secondary battery according to any one of claims 1 to 8, wherein the secondary battery further satisfies at least one of the following conditions:

(vi) the anode comprises at least one of an artificial graphite and a natural graphite;
(vii) the electrolyte further comprises a solvent, the solvent comprises 50 wt%-70 wt% of a chain carbonate, and the chain carbonate is selected from at least one of dimethyl carbonate, ethyl methyl carbonate and diethyl carbonate;
(viii) the electrolyte further comprises a solvent, the solvent comprises 10 wt%-20 wt% of a carboxylate, and the carboxylate is selected from at least one of ethyl acetate and methyl acetate;
(ix) the secondary battery has an electrolyte filling coefficient of 3 g/Ah-3.8 g/Ah.

10. A power consuming device, wherein the power consuming device comprises the secondary battery according to any one of claims 1 to 9.

Europäisches Patentamt
European Patent Office
Office européen des brevets

# EUROPEAN SEARCH REPORT

Application Number
EP 24 22 1509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 142 007 A (HUBEI HUNDRED MILLION WEFT POWER CO LTD) 4 March 2022 (2022-03-04) * examples * ----- | 1-10 | INV. H01M4/136 H01M4/58 H01M4/66 H01M10/0525 H01M10/0567 |
| A | WO 2023/184498 A1 (CONTEMPORARY AMPEREX TECHNOLOGY CO LTD [CN]) 5 October 2023 (2023-10-05) * examples * ----- | 1-10 | |

TECHNICAL FIELDS SEARCHED (IPC)

H01M

The present search report has been drawn up for all claims

2

| Place of search | Date of completion of the search | Examiner |
|---|---|---|
| Munich | 13 June 2025 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 22 1509

This annex lists the patent family members relating to the patent documents cited in the above-mentioned European search report. The members are as contained in the European Patent Office EDP file on
The European Patent Office is in no way liable for these particulars which are merely given for the purpose of information.

13-06-2025

| Patent document cited in search report | Publication date | Patent family member(s) | Publication date |
|---|---|---|---|
| CN 114142007 A | 04-03-2022 | NONE | |
| WO 2023184498 A1 | 05-10-2023 | CN 117321800 A | 29-12-2023 |
| | | EP 4485576 A1 | 01-01-2025 |
| | | US 2025015274 A1 | 09-01-2025 |
| | | WO 2023184498 A1 | 05-10-2023 |

EPO FORM P0459

For more details about this annex : see Official Journal of the European Patent Office, No. 12/82